(19) Europäisches Patentamt / European Patent Office / Office européen des brevets

(11) **EP 4 601 367 A1**

(12) **EUROPEAN PATENT APPLICATION**

(43) Date of publication:
**13.08.2025 Bulletin 2025/33**

(21) Application number: **24156773.4**

(22) Date of filing: **09.02.2024**

(51) International Patent Classification (IPC):
*H04W 56/00* *(2009.01)*

(52) Cooperative Patent Classification (CPC):
**H04L 5/0048;** H04W 56/0015

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nokia Technologies Oy**
**02610 Espoo (FI)**

(72) Inventors:
- **HAKOLA, Sami-Jukka**
  **Kempele (FI)**
- **KARJALAINEN, Juha Pekka**
  **Sotkamo (FI)**
- **KOSKELA, Timo**
  **Oulu (FI)**
- **KAIKKONEN, Jorma Johannes**
  **Oulu (FI)**

(74) Representative: **Nokia EPO representatives**
**Nokia Technologies Oy**
**Karakaari 7**
**02610 Espoo (FI)**

(54) **SYNCHRONIZATION**

(57)    According to an example aspect of the present disclosure, there is provided a method, comprising transmitting, by a base node over an air interface, a set of primary synchronization signals in at least one slot, and transmitting, by the base node over the air interface, a set of synchronization signal blocks in at least one other slot, wherein each primary synchronization signal of the set of primary synchronization signals is associated with a corresponding synchronization signal block of the set of synchronization signal blocks, and wherein a time separation between any two successive primary synchronization signals of the set of primary synchronization signals and a time separation between two corresponding successive synchronization signal blocks of the set of synchronization signal blocks are equal.

Transmitting, over an air interface, a set of primary synchronization signals in at least one slot — **610**

Transmitting, over the air interface, a set of synchronization signal blocks in at least one other slot, wherein each primary synchronization signal of the set of primary synchronization signals is associated with a corresponding synchronization signal block of the set of synchronization signal blocks, and wherein a time separation between any two successive primary synchronization signals of the set of primary synchronization signals and a time separation between two corresponding successive synchronization signal blocks of the set of synchronization signal blocks are equal — **620**

FIG. 6

**Description**

FIELD

The present disclosure relates to synchronization procedures in wireless communication networks.

BACKGROUND

In cellular communication networks, user equipments, UEs, roam in a coverage area of the network and attach themselves to cells of the network.

To obtain dependable communication with a cell, a UE needs to synchronize itself with the cell, for example in both time and frequency domains, whereby symbol timing and frequency synchronization are obtained, so that for example orthogonal frequency domain multiplexing, OFDM, -based communication may be conducted between the UE and the cell.

Synchronization signals may be transmitted by the cell, and detected by the UE, to achieve synchronization.

SUMMARY

According to some aspects, there is provided the subject-matter of the independent claims. Some embodiments are defined in the dependent claims. The scope of protection sought for various embodiments of the disclosure is set out by the independent claims. The embodiments, examples and features, if any, described in this specification that do not fall under the scope of the independent claims are to be interpreted as examples useful for understanding various embodiments of the disclosure.

According to an aspect of the present disclosure, there is provided an apparatus comprising at least one processing core and at least one memory storing instructions that, when executed by the at least one processing core, cause the apparatus at least to transmit, over an air interface, a set of primary synchronization signals in at least one slot, and transmit, over the air interface, a set of synchronization signal blocks in at least one other slot, wherein each primary synchronization signal of the set of primary synchronization signals is associated with a corresponding synchronization signal block of the set of synchronization signal blocks, and wherein a time separation between any two successive primary synchronization signals of the set of primary synchronization signals and a time separation between two corresponding synchronization signal blocks of the set of synchronization signal blocks are equal. The apparatus may be a base node or a control device configured to control the functioning thereof, possibly when installed therein. Example embodiments of the aspect may comprise at least one feature from the following bulleted list or any combination of the following features:

- wherein a time separation between a primary synchronization signal of the set of primary synchronization signals and a corresponding synchronization signal block of the set of synchronization signal blocks is equal to a time separation between another primary synchronization signal of the set of primary synchronization signals and another corresponding synchronization signal block of the set of synchronization signal blocks;
- wherein a value of the time separation between a primary synchronization signal of the set of primary synchronization signals and a corresponding synchronization signal block of the set of synchronization signal blocks is predetermined;
- wherein a time separation between a first primary synchronization signal and a second primary synchronization signal is expressed as a number of orthogonal frequency domain multiplexing symbols separating a first symbol carrying the first primary synchronization signal and a first symbol carrying the second primary synchronization signal, a time separation between a primary synchronization signal and a corresponding synchronization signal block is expressed as a number of orthogonal frequency domain multiplexing symbols separating a first symbol carrying the primary synchronization signal and a first symbol carrying the corresponding synchronization signal block, and a time separation between a first signal synchronization block and a second synchronization signal block is expressed as a number of orthogonal frequency domain multiplexing symbols separating a first symbol carrying the first signal synchronization block and a first symbol carrying the second synchronization signal block;
- wherein the set of synchronization signal blocks does not comprise any primary synchronization signals;
- wherein the set of synchronization signal blocks individually comprise a secondary synchronization signal and a physical broadcast channel;
- wherein a periodicity of the set of primary synchronization signals is larger than, or equal to, a periodicity of the set of synchronization signal blocks;
- wherein the set of primary synchronization signals precedes the set of synchronization signal blocks, or the set of synchronization signal blocks precedes the set of primary synchronization signals;

- wherein a primary synchronization signal of the set of primary synchronization signals and a corresponding synchronization signal block of the set of synchronization signal blocks are beamformed in a same direction;
- wherein a primary synchronization signal of the set of primary synchronization signals and a corresponding synchronization signal block of the set of synchronization signal blocks are assigned a common index value;
- wherein the time separation is based on a carrier frequency and/or a numerology.
- wherein the set of primary synchronization signals is in 1:N relationship with N sets of synchronization signal blocks comprising the set of synchronization signal blocks, N being a positive integer greater than 1, or the set of primary synchronization signals is in 1: 1 relationship with the set of synchronization signal blocks.

According to an aspect of the present disclosure, there is provided an apparatus comprising at least one processing core and at least one memory storing instructions that, when executed by the at least one processing core, cause the apparatus at least to detect, over an air interface, a primary synchronization signal of a set of primary synchronization signals in a slot, and detect, over the air interface, a corresponding synchronization signal block of a set of synchronization signal blocks in another slot based on the detected primary synchronization signal, wherein a time separation between the detected primary synchronization signal of the set of primary synchronization signals and the corresponding synchronization signal block of the set of synchronization signal blocks is predetermined. The apparatus may be a user equipment or a control device configured to control the functioning thereof, possibly when installed therein.

According to an aspect of the present disclosure, there is provided an apparatus comprising at least one processing core and at least one memory storing instructions that, when executed by the at least one processing core, cause the apparatus at least to determine a time separation between a primary synchronization signal of a set of primary synchronization signals in a slot and at least one corresponding synchronization signal block of a set of synchronization signal blocks in another slot, wherein the time separation is the same as a time separation between another primary synchronization signal of the set of primary synchronization signals and at least one other corresponding synchronization signal block of the set of synchronization signal blocks, and detect, based at least on the determined time separation and a location of said primary synchronization signal, the at least one corresponding synchronization signal block of said primary synchronization signal. The apparatus may be a user equipment or a control device configured to control the functioning thereof, possibly when installed therein. Example embodiments of the aspect may comprise at least one feature from the following bulleted list or any combination of the following features:

- wherein the apparatus is further configured at least to select a frequency band for an initial cell search, receive said primary synchronization signal and the at least one corresponding synchronization signal block on the frequency band, and continue, after detection of the at least one corresponding synchronization signal block, the initial access;
- wherein the apparatus is further configured at least to determine, based on a standard specification, a value of the time separation between said primary synchronization signal of the set of primary synchronization signals and the at least one corresponding synchronization signal block of the set of synchronization signal blocks;
- wherein the standard specification is a 3GPP standard specification;
- wherein a time in terms of symbols between said primary synchronization signal and the at least one corresponding synchronization signal block is the same as a time difference between said one other primary synchronization signal and the at least one other synchronization signal block;
- wherein the apparatus is further configured at least to detect said primary synchronization signal from a first synchronization signal block burst, and detect, after determining the time separation, the at least one corresponding synchronization signal block from a second synchronization signal block burst, wherein said second synchronization signal block burst is after the first synchronization signal block burst;
- wherein the apparatus is further configured at least to detect multiple synchronization signal blocks based on the time separation;
- wherein the apparatus is further configured at least to detect said primary synchronization signal in time domain after receiving said primary synchronization signal;
- wherein the apparatus is further configured at least to store a part of received samples, and detect said primary synchronization signal from the part of samples;
- wherein the apparatus is further configured at least to determine, after detecting said primary synchronization signal burst, a received power in candidate locations of a synchronization signal burst, and detect, based on the received power, the at least one corresponding synchronization signal block of said primary synchronization signal;
- wherein the apparatus is further configured at least to determine that a received power of said one synchronization signal is above a threshold value, and detect, after said determination, the at least one corresponding synchronization signal block of said primary synchronization signal;
- wherein the apparatus is further configured at least to apply a relative power offset with respect to a primary synchronization signal hypothesis;
- wherein a periodicity of the set of primary synchronization signals is larger than, or equal to, a periodicity of the set of synchronization signal blocks.

According to an aspect, there is provided a method comprising, transmitting, by a base node over an air interface, a set of primary synchronization signals in at least one slot, and transmitting, by the base node over the air interface, a set of synchronization signal blocks in at least one other slot, wherein each primary synchronization signal of the set of primary synchronization signals is associated with a corresponding synchronization signal block of the set of synchronization signal blocks, and wherein a time separation between any two successive primary synchronization signals of the set of primary synchronization signals and a time separation between two corresponding successive synchronization signal blocks of the set of synchronization signal blocks are equal.

According to an aspect, there is provided a method comprising, detecting, by a user equipment and over an air interface, a primary synchronization signal of a set of primary synchronization signals in a slot, and detecting, by the user equipment over the air interface, a corresponding synchronization signal block of a set of synchronization signal blocks in another slot based on the detected primary synchronization signal, wherein a time separation between the detected primary synchronization signal of the set of primary synchronization signals and the corresponding synchronization signal block of the set of synchronization signal blocks is predetermined.

According to an aspect, there is provided a method comprising, determining, by a user equipment, a time separation between a primary synchronization signal of a set of primary synchronization signals in a slot and at least one corresponding synchronization signal block of a set of synchronization signal blocks in another slot, wherein the time separation is the same as a time separation between another primary synchronization signal of the set of primary synchronization signals and at least one other corresponding synchronization signal block of the set of synchronization signal blocks, and detecting, by the user equipment, based at least on the determined time separation and a location of said primary synchronization signal, the at least one corresponding synchronization signal block of said primary synchronization signal.

According to an aspect of the present disclosure, there is provided an apparatus comprising means for transmitting, over an air interface, a set of primary synchronization signals in at least one slot, and means for transmitting, over the air interface, a set of synchronization signal blocks in at least one other slot, wherein each primary synchronization signal of the set of primary synchronization signals is associated with a corresponding synchronization signal block of the set of synchronization signal blocks, and wherein a time separation between any two successive primary synchronization signals of the set of primary synchronization signals and a time separation between two corresponding successive synchronization signal blocks of the set of synchronization signal blocks are equal. The apparatus of the aspect may be a base node or a control device configured to control the functioning thereof, possibly when installed therein.

According to an aspect of the present disclosure, there is provided an apparatus comprising means for detecting, over an air interface, a primary synchronization signal of a set of primary synchronization signals in a slot, and means for detecting, over the air interface, a corresponding synchronization signal block of a set of synchronization signal blocks in another slot based on the detected primary synchronization signal, wherein a time separation between the detected primary synchronization signal of the set of primary synchronization signals and the corresponding synchronization signal block of the set of synchronization signal blocks is predetermined. The apparatus of the aspect may be a user equipment or a control device configured to control the functioning thereof, possibly when installed therein.

According to an aspect of the present disclosure, there is provided an apparatus comprising means for determining a time separation between a primary synchronization signal of a set of primary synchronization signals in a slot and at least one corresponding synchronization signal block of a set of synchronization signal blocks in another slot, wherein the time separation is the same as a time separation between another primary synchronization signal of the set of primary synchronization signals and at least one other corresponding synchronization signal block of the set of synchronization signal blocks, and means for detecting based at least on the determined time separation and a location of said primary synchronization signal, the at least one corresponding synchronization signal block of said primary synchronization signal. The apparatus of the aspect may be a user equipment or a control device configured to control the functioning thereof, possibly when installed therein.

According to an aspect of the present disclosure, there is provided a computer program comprising instructions which, when the program is executed by an apparatus, cause the apparatus to carry out transmitting, over an air interface, a set of primary synchronization signals in at least one slot, and transmitting, over the air interface, a set of synchronization signal blocks in at least one other slot, wherein each primary synchronization signal of the set of primary synchronization signals is associated with a corresponding synchronization signal block of the set of synchronization signal blocks, and wherein a time separation between any two successive primary synchronization signals of the set of primary synchronization signals and a time separation between two corresponding successive synchronization signal blocks of the set of synchronization signal blocks are equal.

According to an aspect of the present disclosure, there is provided a computer program comprising instructions which, when the program is executed by an apparatus, cause the apparatus to carry out detecting, over an air interface, a primary synchronization signal of a set of primary synchronization signals in a slot, and detecting, over the air interface, a corresponding synchronization signal block of a set of synchronization signal blocks in another slot based on the detected primary synchronization signal, wherein a time separation between the detected primary synchronization signal of the set of primary synchronization signals and the corresponding synchronization signal block of the set of synchronization signal blocks is predetermined.

According to an aspect of the present disclosure, there is provided a computer program comprising instructions which, when the program is executed by an apparatus, cause the apparatus to carry out determining a time separation between a primary synchronization signal of a set of primary synchronization signals in a slot and at least one corresponding synchronization signal block of a set of synchronization signal blocks in another slot, wherein the time separation is the same as a time separation between another primary synchronization signal of the set of primary synchronization signals and at least one other corresponding synchronization signal block of the set of synchronization signal blocks, and detecting, based at least on the determined time separation and a location of said primary synchronization signal, the at least one corresponding synchronization signal block of said primary synchronization signal.

According to an aspect of the present disclosure, there is provided a non-transitory computer readable medium having stored thereon a set of computer readable instructions that, when executed by at least one processor, cause an apparatus to at least transmit, over an air interface, a set of primary synchronization signals in at least one slot, and transmit, over the air interface, a set of synchronization signal blocks in at least one other slot, wherein each primary synchronization signal of the set of primary synchronization signals is associated with a corresponding synchronization signal block of the set of synchronization signal blocks, and wherein a time separation between any two successive primary synchronization signals of the set of primary synchronization signals and a time separation between two corresponding successive synchronization signal blocks of the set of synchronization signal blocks are equal.

According to an aspect of the present disclosure, there is provided a non-transitory computer readable medium having stored thereon a set of computer readable instructions that, when executed by at least one processor, cause an apparatus to at least detect, over an air interface, a primary synchronization signal of a set of primary synchronization signals in a slot, and detect, over the air interface, a corresponding synchronization signal block of a set of synchronization signal blocks in another slot based on the detected primary synchronization signal, wherein a time separation between the detected primary synchronization signal of the set of primary synchronization signals and the corresponding synchronization signal block of the set of synchronization signal blocks is predetermined.

According to an aspect of the present disclosure, there is provided a non-transitory computer readable medium having stored thereon a set of computer readable instructions that, when executed by at least one processor, cause an apparatus to at least determine a time separation between a primary synchronization signal of a set of primary synchronization signals in a slot and at least one corresponding synchronization signal block of a set of synchronization signal blocks in another slot, wherein the time separation is the same as a time separation between another primary synchronization signal of the set of primary synchronization signals and at least one other corresponding synchronization signal block of the set of synchronization signal blocks, and detect, based at least on the determined time separation and a location of said primary synchronization signal, the at least one corresponding synchronization signal block of said primary synchronization signal.

BRIEF DESCRIPTION OF THE DRAWINGS

FIG. 1 illustrates an example system in accordance with at least some example embodiments of the present disclosure;

FIG. 2 illustrates a first example of a radio frame in accordance with at least some example embodiments of the present disclosure;

FIG. 3 illustrates a second example of a radio frame in accordance with at least some example embodiments of the present disclosure;

FIG. 4 illustrates an example apparatus capable of supporting at least some example embodiments of the present disclosure;

FIG. 5 illustrates signalling in accordance with at least some example embodiments of the present disclosure, and

FIG. 6 illustrates a flow graph of a first method in accordance with at least some example embodiments of the present disclosure;

FIG. 7 illustrates a flow graph of a second method in accordance with at least some example embodiments of the present disclosure; and

FIG. 8 illustrates a flow graph of a third method in accordance with at least some example embodiments of the present disclosure.

EMBODIMENTS

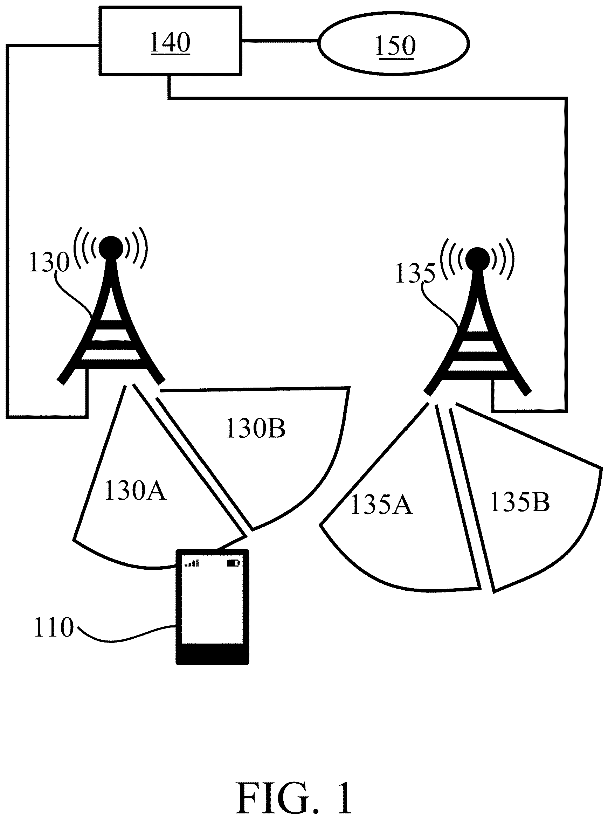

FIG. 1 illustrates an example system in accordance with at least some embodiments of the present disclosure. The example system illustrated in FIG. 1 comprises base stations 130, 135 in communication with user equipments, UEs, such as UE 110. A radio link connects base station 130 with UE 110. The radio link may be bidirectional, comprising an uplink, UL, to convey information from UE 110 toward base station 130, and a downlink, DL, to convey information from base station 130 toward UE 110. A cellular communication system may comprise hundreds or thousands of base stations, of which only two are illustrated in FIG. 1 for the sake of clarity of the illustration. The base stations may be distributed in that they comprise a centralized unit, CU, and one or more distributed units, DU, and possibly one or more remote radio heads, RRH. A base station is an example of a base node of a network, such as a wireless network node.

In some example embodiments, the network scenario may comprise a relay node instead of, or in addition to, UE 110 and/or base station 130. Relaying may be used for example when operating on millimeter-wave frequencies. One example of the relay node may be an integrated access and backhaul, IAB, node. The IAB node may be referred to as a self-backhauling relay as well. Another example of a relay may be an out-band relay. In general, the relay node may comprise two parts:

1) DU part which may facilitate functionalities of base station 130, such as a gNB. Thus, in some example embodiments, the DU part of a relay may be referred to as base station 130 and the DU may perform tasks of base station 130;

2) mobile termination, MT, part which may facilitate functionalities of UE 110, i.e., a backhaul link which may be the communication link between a parent node (DU), such as a DU part of base station 130, and the relay, such as an IAB node. In some example embodiments, the MT part may be referred to as UE 110 and perform tasks of UE 110.

Base station 130 is further coupled communicatively with core network node 140, which may comprise, for example, a mobility management entity, MME, or access and mobility management function, AMF. The core network node 140 may be coupled with further core network nodes, and with a network 150, which may comprise the Internet or a corporate network, for example. The system may communicate with further networks via network 150. Examples of the further core network nodes, which are not illustrated in FIG. 1 for the sake of clarity, include gateways and subscriber information repositories. Core network nodes may be virtualized in the sense that they may run as software modules on computing substrates, such that more than one virtualized network node may run on a same computing substrate. The network may be configured to function in accordance with a suitable cellular standard such as long term evolution, LTE, fifth generation, 5G, which is also known as new radio, NR, or sixth generation, 6G standards as defined by the 3$^{rd}$ generation partnership project, 3GPP. To obtain interoperation, UEs attaching to the network are configured to support a same standard as the network.

Base station 130 controls, in the example of FIG 1 cells 130A and 130B, of which UE 110 is in the situation illustrated in FIG. 1 attached with cell 130A, and base station 135 controls, in the example of FIG. 1, cells 135A and 135B. The number of cells, or beams, may be in excess of what is illustrated in FIG. 1. It is also possible that a base station has a single cell or beam. While illustrated as sector-shaped, cells of a same base station may be omnidirectional and operate on different frequencies, for example. A mobility event may comprise a switch from one beam to another beam of the same cell, or a switch from one cell to another cell. To support mobility procedures, UEs, including UE 110, are configured to conduct mobility measurements to measure signal strengths of adjacent beams and/or cells, and report results of these measurements to the network, which may then take a decision concerning a mobility event, such as a beam change or a cell switch.

Cells, such as cells 130A, 130B, 135A and 135B are configured to transmit synchronization signals, such as primary synchronization signal, PSS, and secondary synchronization signal, SSS, to enable synchronization of UEs to the carrier frequency and frame structure of the cells, for example in connection with initial attach or mobility procedures.

In 5G/NR, for example, the cell provides a synchronization signal block, SSB, which comprises a PSS, SSS, physical broadcast channel, PBCH and a demodulation reference signal, DMRS, for PBCH demodulation. The SSB may be provided, in 5G, using a unitary resource block of four orthogonal frequency domain multiplexing, OFDM, symbols in the time domain and 20 physical resource blocks, PRBs, in the frequency domain, wherein each PRB in 5G amounts to twelve subcarriers. In 5G, the PSS is an m-sequence and the SSS is a gold sequence, which is obtained from two m-sequences of equal length using an exclusive-OR operation. The PSS and SSS of 5G are transmitted using binary phase-shift keying, BPSK, while the PBCH of 5G is transmitted using quadrature phase shift keying, QPSK. The PSS is used for acquiring time and frequency synchronization with the cell, while the SSS is used for more precise frequency synchronization with the cell, and the PBCH is used in frame and half-frame synchronization and to convey a DMRS, used for slot timing. The PBCH may also be used to convey configuration information the UE may use in accessing the cell, such as a control channel configuration for scheduling one or more system information blocks, SIB, for example SIB1. Further, a physical cell identifier, PCI, $N_{ID}^{cell}$, may be defined by $N_{ID}^{cell} = 3N_{ID}^{(1)} + N_{ID}^{(2)}$, where $N_{ID}^{(1)} \in \{0, 1, ..., 335\}$ and $N_{ID}^{(2)} \in \{0, 1, 2\}$. PSS is an m-sequence which depends on $N_{ID}^{(2)}$ and hence there are three possible m-sequences that may be used as the PSS in 5G. SSS is a gold-sequence which depends on both $N_{ID}^{(1)}$ and $N_{ID}^{(2)}$. Example embodiments of the present disclosure provide enhancements for PSS transmission and reception.

In 5G/NR, initial cell search, and initial time and frequency synchronization acquisition are based on UE 110 searching and detecting an SSB comprising the PSS, the SSS, the PBCH and DMRS for PBCH demodulation. A cell may transmit one or multiple SSBs to support beamforming for the SSB. The SSB burst is transmitted with certain periodicity in the cell. Default periodicity is 20 ms.

In 5G/NR, each slot where the SSB(s) can be transmitted can have up to two SSBs due to a four-symbol time domain allocation. Therefore, system overhead from the SSBs may be rather high when considering the number of slots affected and high number of SSBs required. For example, for an upper part of frequency range, FR, 3 (7 - 20 GHz) and FR2, the number of SSBs can be up to 32 or 64, meaning 16 and 32 affected DL slots every 20 ms, respectively.

UE 110 may perform the initial cell search by searching a PSS in time, sample by sample within the PSS period, and in frequency domain on a given synchronization raster points in frequency using time domain processing (correlation), i.e., without fast Fourier transform, FFT, processing. In frequency domain, a synchronization raster for each band may be defined in a standard, such as a 3GPP standard specification, wherein each synchronization raster defines possible PSS locations in frequency domain for initial cell selection. Alternatively, the synchronization raster may be signaled by the network, e.g., by cell 130a. After detection of the PSS, UE 110 may perform finer frequency synchronization from the SSS and from the PBCH DMRS. Further, in connected mode, UE 110 may be configured with a tracking reference signal, TRS. The TRS may be a specific signal for the time and frequency synchronization tracking. Thus, the PSS might not be needed with the same extent as for example the SSS. It is also to be noted that the SSS is the main reference signal in NR for performing radio resource management, RRM, measurements by UE 110, such as mobility measurements.

Embodiments of the present disclosure therefore enable reduction of the system overhead caused by SSB bursts due to the long SSB length in terms of number of symbols. The PSS may be separated from the SSB, to enable transmitting the PSS(s) with larger or equal periodicity compared to the SSS and the PBCH. The SSB comprising SSS and PBCH (& DMRS), without the PSS, may be referred to as a PSS-less SSB, SSSB. For example, the PSS-less SSB may have three-symbol allocation and there may be three PSS-less SSBs in a PSS-less SSB slot and PSSs may be transmitted separately. The time domain relation between PSS(s) and corresponding PSS-less SSB(s) may be further defined by defining a time separation between PSS(s) and corresponding PSS-less SSB(s). In some embodiments, the PSS may be transmitted with a different beam, like a wider beam, than the PSS-less SSB. It is noted that even though in the following illustrations PSS-less SSBs (SSSBs) precede the PSS, the order may also be reversed.

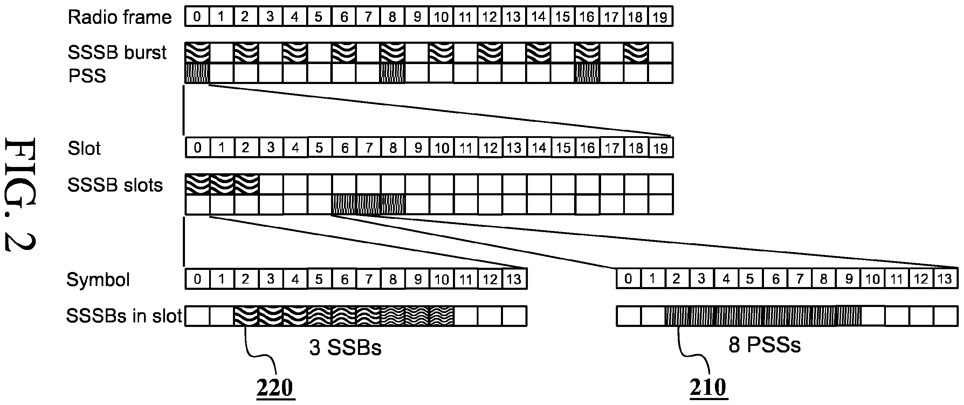

FIG. 2 illustrates a first example of a radio frame in accordance with at least some example embodiments of the present disclosure. In the first example illustrated in FIG. 2, PSSs 210 may be packed in one slot as much as possible while UE 110 has multiple higher number of hypothesis for locations of the corresponding PSS-less SSBs (SSSBs) 220.

In case of the first example, the number of possible PSS-SSS timing relations may be calculated by multiplying a number of PSS-less SSBs, a number of PSSs and a number of PSS-less SSB periods. For example, if a maximum number of PSS-less SSBs is 8, the number of possible PSS-SSS timing relations may be 8 x 8 x 4 = 256. Alternatively, if a maximum number of PSS-less SSBs is 16, the number of possible PSS-SSS timing relations may be 16 x 16 x 4 = 1024.

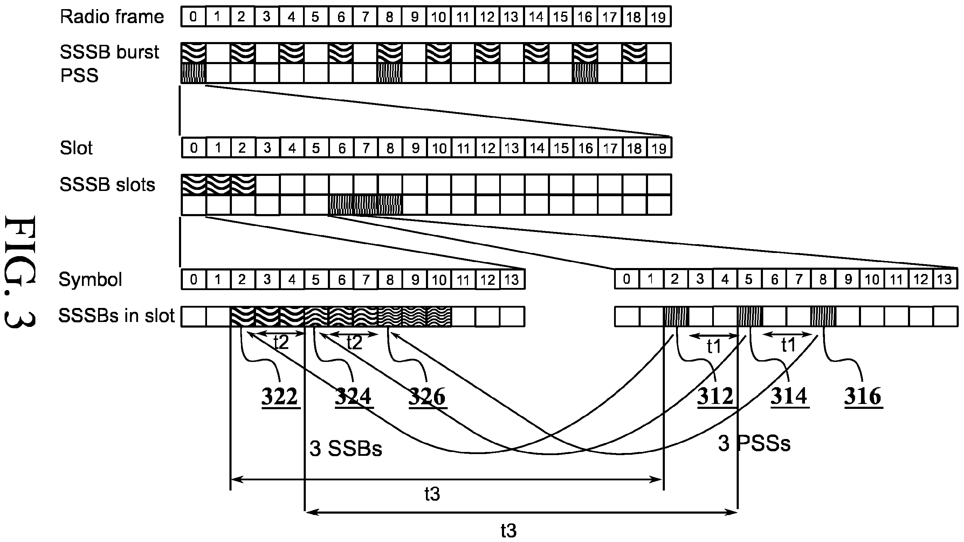

FIG. 3 illustrates a second example of a radio frame in accordance with at least some example embodiments of the present disclosure. In the second example illustrated in FIG. 3, PSS 312, another PSS 314 and yet another PSS 316 may form a set of PSSs, to be transmitted in a slot by base station 130. Similarly, PSS-less SSB 322, another PSS-less SSB 324 and yet another PSS-less SSB 326 may form a set of SSBs, to be transmitted in another slot by base station 130. In some embodiments, PSS 312 may be referred to as a first PSS, another PSS 314 may be referred to as a second PSS, and yet another PSS 316 may be referred to as a third PSS. In some embodiments, PSS-less SSB 322 may be referred to as a first PSS-less SSB, another PSS-less SSB 324 may be referred to as a second PSS-less SSB, and yet another PSS 326 may be referred to as a third PSS-less SSB.

**EP 4 601 367 A1**

PSSs 312, 314, 316 may be packed in the slot with the same number as, and in the same symbol position as, the corresponding PSS-less SSBs 322, 324, 326 in said another slot, respectively. PSS-less SSBs 322, 324, 326 might not comprise any PSS. The set of SSBs may individually comprise an SSS and a PBCH. That is, each of PSS-less SSBs 322, 324, 326 may comprise an SSS and a PBCH. The set of PSSs may precede the set of PSS-less SSBs or the set of PSS-less SSBs may precede the set of PSSs. The set of PSSs may correspond to one or more PSSs beamformed in different directions, and the set of PSS-less SSBs may correspond to one or more PSS-less SSBs beamformed in different directions, like an SSB burst in NR.

As illustrated in FIG. 3, for example PSS 312 may be transmitted in the PSS slot in one of the symbol positions as corresponding PSS-less SSB 322 in the PSS-less SSB slot. That is, there may be a one-to-one mapping between PSSs and PSS-less SSBs. Consecutive PSSs in the PSS slot may have the same time separation, i.e. distance in time, as the SSSs of consecutive PSS-less SSBs in the PSS-less SSB slot, thereby allowing the UE to reduce the number of SSS (PSS-less SSB) positions in a search process following the detection of a particular PSS.

In the second example illustrated in FIG. 3, PSS-less SSB 322 may be a corresponding PSS-less SSB of PSS 312, another PSS-less SSB 324 may be a corresponding PSS-less SSB of another PSS 314, and yet another PSS-less SSB 326 may be a corresponding SSB of yet another PSS 316. That is, PSS-less SSB 322 may be detected based on detecting PSS 312, another PSS-less SSB 324 may be detected based on detecting another PSS 314, and yet another PSS-less SSB 326 may be detected based on detecting yet another PSS 316. Therefore, PSS 312 may be associated with PSS-less SSB 322, another PSS 314 may be associated with another PSS-less SSB 324, and yet another PSS 316 may be associated with yet another PSS-less SSB 326. The set of PSS-less SSBs 322, 324, 326 may thus be associated with the set of PSSs 312, 322, 324, respectively.

A time separation $t1$ between any two PSSs of the set of PSSs and a time separation $t2$ between two corresponding PSS-less SSBs of the set of PSS-less SSBs may be equal. That is, the time separation $t1$ between PSS 312 and another PSS 314 may be the same as the time separation $t2$ between PSS-less SSB 322 and another PSS-less SSB 324. Similarly, the time separation $t1$ between another PSS 314 and yet another PSS 316 may be the same as the time separation $t2$ between another PSS-less SSB 324 and yet another PSS-less SSB 326. The time separation $t3$ between PSS 312 and PSS-less SSB 322 may be the same as the time separation $t3$ between another PSS 314 and another PSS-less SSB 324, and so forth.

That is, the time separation between any two successive PSS of the set of PSSs and the time separation between two corresponding PSS-less SSBs of the set of PSS-less SSBs may be equal, and equivalently formulated such that the time separation between PSS 312 of the set of PSSs and corresponding PSS-less SSB 322 of the set of PSS-less SSBs is equal to the time separation between another PSS 314 of the set of PSSs and another corresponding PSS-less SSB 324 of the set of PSS-less SSBs.

In some embodiments, the time separations may be based on a carrier frequency and/or a numerology. More specifically, the time separations may be based on a frequency band to which a carrier frequency of a serving cell of UE 110 belongs, and/or a numerology used for transmitting the PSSs and PSS-less SSBs.

The time separations may refer to a distance in time. Alternatively, or in addition, the time separations may be expressed as a number of OFDM symbols. For example, a time separation in terms of OFDM symbols between PSS 312 and PSS-less SSB 322 may be the same as a time separation between another PSS 314 and PSS-less SSB 324. For instance, the time separation $t3$ between PSS 312 and corresponding PSS-less SSB 322 may be expressed as a number of OFDM symbols between a first OFDM symbol carrying PSS 312 and a first OFDM symbol carrying PSS-less SSB 322. Still for instance, the time separation $t1$ between successive PSSs 312 and 314 may be expressed as a number of OFDM symbols between a first OFDM symbol carrying PSS 312 and a first OFDM symbol carrying PSS 314. Still for instance, the time separation $t2$ between successive PSS-less SSBs 322 and 324 may be expressed as a number of OFDM symbols between a first OFDM symbol carrying PSS-less SSB 322 and a first OFDM symbol carrying PSS-less SSB 324.

In some embodiments, a value of the time separation between PSS 312 of the set of PSSs and corresponding PSS-less SSB 322 of the set of PSS-less SSBs may be pre-determined, for example in a standard specification, such as a 3GPP standard specification. UE 110 may hence determine the value of the time separation based on the standard specification.

In some embodiments, PSS 312 of the set of PSSs and corresponding PSS-less SSB 322 of the set of PSS-less SSBs may be assigned a common index value. Different PSSs of the set of PSSs and different PSS-less SSBs of the set of PSS-less SSBs may be assigned different index values. That is, another PSS 314 of the set of PSSs and another PSS-less SSB 324 of the set of PSS-less SSBs may be assigned a different index value than PSS 312 of the set of PSSs and PSS-less SSB 322 of the set of PSS-less SSBs. This index value may for instance correspond to a particular transmit beamforming configuration.

In case of the second example, the number of possible PSS-SSS timing relations may be calculated by multiplying a number of PSS-less SSBs within a PSS-less SSB burst with a number of PSS-less SSB periods within a PSS period. For example, if a maximum number of PSS-less SSBs is 8, the number of possible PSS-SSS timing relations may be 3 x 4 = 12. Alternatively, if a maximum number of PSS-less SSBs is 16, the number of possible PSS-SSS timing relations may be 6 x 4 = 24.

While the number of possible PSS-SSS timing relations, when UE 110 is performing the search as in case of the first example illustrated in FIG. 2, increases exponentially as a function of maximum number of PSS-less SSBs, the increase in case of the second example illustrated in FIG. 3 is linear. In case of the first example, the number of possible PSS-SSS timing relations may be limited by restricting the number of PSSs in a slot, which would result to the second example illustrated in FIG. 3 when the number of PSSs in the slot is limited down to a same number as PSS-less SSBs in said another slot. Alternatively, the number of possible PSS sequences may be increased, enabling further partitioning and/or linking to PSS-less SSB locations. However, such an approach would increase the PSS search hypotheses of UE 110. Thus, the second example illustrated In FIG. 3 may be preferred.

In some embodiments, the set of PSSs 312, 314 and 316 may be in 1:N relationship with N sets of PSS-less SSBs comprising the set of PSS-less SSBs 322, 324 and 326 (PSSs may be less frequent than PSS-less SSBs, i.e. with a higher periodicity). Alternatively, the set of PSSs may be in 1:1 relationship with the set of PSS-less SSBs (PSSs and PSS-less SSBs may be equally frequent, i.e. with equal periodicity).

In some embodiments, a PSS transmission may have a PSS periodicity in time which is larger than a periodicity for the PSS-less SSBs. For example, the PSS periodicity in time may be multiple times the periodicity in time of the PSS-less SSBs. More generally, a periodicity of the set of PSSs may be larger than (i.e., less frequent than), or equal to (i.e., as frequent as) a periodicity of the set of PSS-less SSBs.

In some embodiments, UE 110 may, upon detection of a PSS, only search for a corresponding PSS-less SSB from the same radio frame, or from the next radio frame having PSS-less SSB positions. For example, UE 110 may detect PSS 312 from a first PSS-less SSB burst, and detect, after determining the time separation, corresponding PSS-less SSB 322 from a second PSS-less SSB burst, wherein the second PSS-less SSB burst is after the first burst, i.e., after PSS 312.

In some embodiments, there may be uncertainty of the PSS slot, i.e., in which of the consecutive slots the detected PSS is transmitted. To avoid the uncertainty, the PSS sequence initialization may have a component, such as a slot number, within the PSS slots (e.g., {0,1,2} in case PSSs are transmitted within three slots).

In some embodiments, the PSS slots may be selected according to a semi-static time division duplexing, TDD, UL and DL configurations so that PSS slots would occupy DL slots.

In some example embodiments, the number of PSS hypotheses may be increased. For example, the number of PSS hypotheses may be doubled from 3 to 6, so that for each cell identity (sub-group) there would be two alternative candidates that indicate one or more time offsets for a location of a PSS-less SSB. Alternatively, each PSS sequence initialization/hypothesis may be associated with a predefined additional time offset value, and UE 110 may apply a predefined additional time offset on top of a one-to-one time offset value between PSS and PSS-less SSB.

In some embodiments, UE 110 may assume the same PSS configuration for PSS-less SSBs having the same center frequency. In some embodiments, PSSs 312 of the set of PSSs and corresponding PSS-less SSBs 322 of the set of PSS-less SSBs may be beamformed in a same direction. Another PSSs 314 of the set of PSSs and another PSS-less SSBs 324 of the set of PSS-less SSBs may be beamformed to a different direction than PSSs 312 of the set of PSSs and corresponding PSS-less SSBs 322 of the set of PSS-less SSBs. A PSS burst comprising PSSs beamformed in different directions may span over more than one slot. Similarly, an SSB burst comprising PSS-less SSBs beamformed in different directions may span over more than one slot.

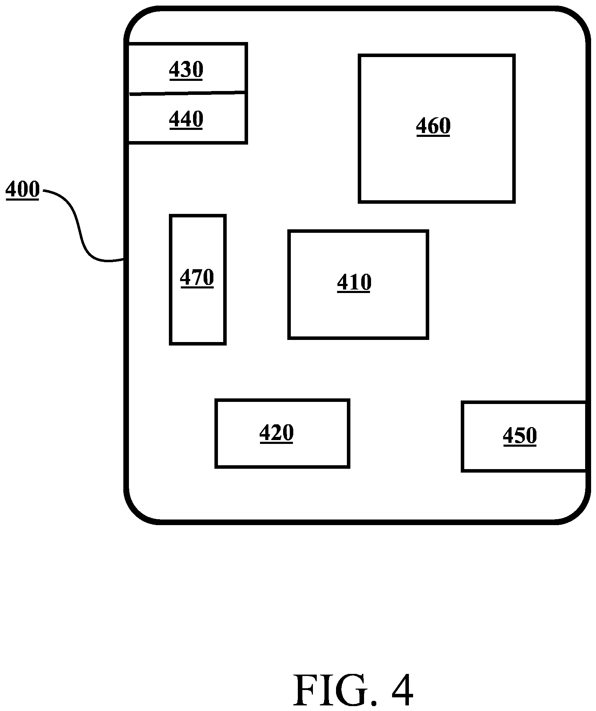

FIG. 4 illustrates an example apparatus capable of supporting at least some embodiments of the present disclosure. Illustrated is device 400, which may comprise, for example, a mobile communication device such as UE 110 or, in applicable parts, a base station 130 of FIG. 1. Comprised in device 400 is processor 410, which may comprise, for example, a single- or multi-core processor wherein a single-core processor comprises one processing core and a multi-core processor comprises more than one processing core. Processor 410 may comprise, in general, a control device. Processor 410 may comprise more than one processor. When processor 410 comprises more than one processor, device 400 may be a distributed device wherein processing of tasks takes place in more than one physical unit. Processor 410 may be a control device. Processor 410 may comprise at least one application-specific integrated circuit, ASIC. Processor 410 may comprise at least one field-programmable gate array, FPGA. Processor 410, optionally together with memory and computer instructions, may be means for performing method steps in device 400, such as detecting, accepting, using, receiving or transmitting. Processor 410 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a UE or base station, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 400 may comprise memory 420. Memory 420 may comprise random-access memory and/or permanent memory. Memory 420 may comprise at least one RAM chip. Memory 420 may be a computer readable medium. Memory 420 may comprise solid-state, magnetic, optical and/or holographic memory, for example. Memory 420 may be at least in part accessible to processor 410. Memory 420 may be at least in part comprised in processor 410. Memory 420 may be means for storing information. Memory 420 may comprise instructions, such as computer instructions that processor 410 is configured to execute. When computer instructions configured to cause processor 410 to perform certain actions are stored in memory 420, and device 400 overall is configured to run under the direction of processor 410 using computer instructions from memory 420, processor 410 and/or its at least one processing core may be considered to be configured to perform said certain actions. Memory 420 may be at least in part external to device 400 but accessible to device 400. Memory 420 may be transitory or non-transitory. The term "non-transitory", as used herein, is a limitation of the medium itself (that is, tangible, not a signal) as opposed to a limitation on data storage persistency (for example, RAM vs. ROM).

Device 400 may comprise a transmitter 430. Device 400 may comprise a receiver 440. Transmitter 430 and receiver 440 may be configured to transmit and receive, respectively, information in accordance with at least one cellular or non-cellular standard. Transmitter 430 may comprise more than one transmitter. Receiver 440 may comprise more than one receiver. Transmitter 430 and/or receiver 440 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 400 may comprise a near-field communication, NFC, transceiver 450. NFC transceiver 450 may support at least one NFC technology, such as NFC, Bluetooth, Wibree or similar technologies.

Device 400 may comprise user interface, UI, 460. UI 460 may comprise at least one of a display, a keyboard, a touchscreen, a vibrator arranged to signal to a user by causing device 400 to vibrate, a speaker or a microphone. A user may be able to operate device 400 via UI 460, for example to accept incoming telephone calls, to originate telephone calls or video calls, to browse the Internet, to manage digital files stored in memory 420 or on a cloud accessible via transmitter 430 and receiver 440, or via NFC transceiver 450, and/or to play games.

Device 400 may comprise or be arranged to accept a user identity module 470. User identity module 470 may comprise, for example, a subscriber identity module, SIM, card installable in device 400. A user identity module 470 may comprise information identifying a subscription of a user of device 400. A user identity module 470 may comprise cryptographic information usable to verify the identity of a user of device 400 and/or to facilitate encryption of communicated information and billing of the user of device 400 for communication effected via device 400.

Processor 410 may be furnished with a transmitter arranged to output information from processor 410, via electrical leads internal to device 400, to other devices comprised in device 400. Such a transmitter may comprise a serial bus transmitter arranged to, for example, output information via at least one electrical lead to memory 420 for storage therein. Alternatively to a serial bus, the transmitter may comprise a parallel bus transmitter. Likewise processor 410 may comprise a receiver arranged to receive information in processor 410, via electrical leads internal to device 400, from other devices comprised in device 400. Such a receiver may comprise a serial bus receiver arranged to, for example, receive information via at least one electrical lead from receiver 440 for processing in processor 410. Alternatively to a serial bus, the receiver may comprise a parallel bus receiver.

Device 400 may comprise further devices not illustrated in FIG. 4. For example, where device 400 comprises a smartphone, it may comprise at least one digital camera. Some devices 400 may comprise a back-facing camera and a front-facing camera, wherein the back-facing camera may be intended for digital photography and the front-facing camera for video telephony. Device 400 may comprise a fingerprint sensor arranged to authenticate, at least in part, a user of device 400. In some embodiments, device 400 lacks at least one device described above. For example, some devices 400 may lack a NFC transceiver 450 and/or user identity module 470.

Processor 410, memory 420, transmitter 430, receiver 440, NFC transceiver 450, UI 460 and/or user identity module 470 may be interconnected by electrical leads internal to device 400 in a multitude of different ways. For example, each of the aforementioned devices may be separately connected to a master bus internal to device 400, to allow for the devices to exchange information. However, as the skilled person will appreciate, this is only one example and depending on the embodiment various ways of interconnecting at least two of the aforementioned devices may be selected without departing from the scope of the present disclosure.

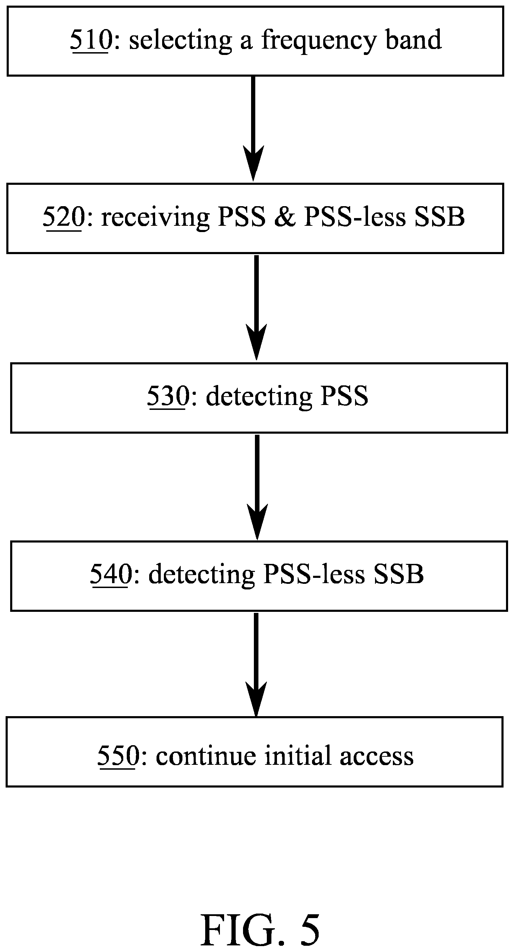

FIG. 5 illustrates UE implementation in accordance with at least some embodiments of the present disclosure. Time advances from the top toward the bottom. UE 110 may be switched on in the beginning.

At step 510, UE 110 may select a frequency band for an initial cell search. At step 520, UE 110 may receive, on the frequency band, at least one PSS, such as PSS 312, of the set of PSSs in a slot, and at least one corresponding PSS-less SSB, such as PSS-less SSB 322, of the set of PSS-less SSBs in another slot. At step 530, UE 110 may detect PSS 312. UE 110 may thus detect PSS 312 in time domain after receiving PSS 312. For example, UE 110 may start searching and detecting PSS 312 according to a defined synchronization raster and assumption of the 80 ms periodicity of the PSSs. UE 110 may then determine the time separation $t3$ between PSS 312 and corresponding PSS-less SSB 322.

At step 540, UE 110 may, after detection of PSS 312, start detecting corresponding PSS-less SSB 322. UE 110 may detect PSS-less SSB 322 based at least on the determined time separation $t3$ and a location (symbol) of PSS 312. At step 550, UE 110 may continue, after detecting PSS-less SSB 322, the initial access.

In some embodiments, UE 110 may consider the next PSS-less SSB burst after detected PSS 312 and detect PSS-less SSB in the positions (e.g. by detecting SSS) having a fixed time separation $t3$ (i.e., distance in time domain) from PSS 312. That is, UE 110 may detect PSS 312 from a first PSS burst, and detect, after determining the time separation, corresponding PSS-less SSB 322 from a second PSS-less SSB burst, wherein the second PSS-less SSB burst is after the first PSS burst. UE 110 may need to check that many different distances that the PSS-less SSB burst is having length in number of slots.

In some embodiments, UE 110 may consider multiple PSS-less SSBs bursts and detect PSS-less SSBs in the positions having multiple fixed time separations from PSS 312. That is, UE 110 may detect multiple PSS-less SSBs from different PSS-less SSB bursts based on different time separations. UE 110 may utilize combining for the SSS (SSSB) in order to have more reliable detection. UE 110 may continue initial access after detecting the PSS-less SSB.

Due to the numerous possible frequency positions of the PSSs and also due to initial frequency offset due to non-optimal crystal, UE 110 may perform PSS detection in time domain and in offline processing. That is, UE 110 may store samples into the memory from one full PSS period. However, increase in periodicity, e.g., up to 80 ms from 20 ms may mean that UE 110 cannot store the full period at once. Thus, UE 110 may store 20 ms chunk of samples and process that. That is, UE 110 may store a chunk of received samples and detect PSS 312 from the chunk of samples. The chunk of sample may be referred to as a part of samples, wherein the part of samples is a part of the received PSS-less SSB transmission. If there is no PSS and/or UE 110 does not detect any PSS, UE 110 may take the next 20 ms chunk of samples for the processing, and so on. Alternatively, if UE 110 does not find PSS from the 20 ms chunk, UE 110 may search directly the SSS of the PSS-less SSB.

In some embodiments, UE 110 may, after detection of PSS 312, reduce the complexity of the SSS search by determining the received power in PSS-less SSB candidate locations, before doing actual SSS detection. That is, UE 110 may determine, after detecting PSS 312, a received power in said candidate locations of a PSS-less SSB and detect, based on the received power, corresponding PSS-less SSB 322 of PSS 312.

In some embodiments, additional time offset values may be predefined, e.g., in a standard specification, for each PSS sequence initialization/hypothesis. In such a case, UE 110 may apply predefined time offset values on top of time offset values between PSS-less SSB 322 and PSS 312. To enhance the reliability of additional time offset detection, UE 110 may apply a threshold value, e.g., in power [dBm] above which received power of detected PSS 312 should be identified as "reliable" PSS hypothesis/initialization. That is, UE 110 may determine that a received power of PSS 312 is above a threshold value and detect, after said determination, corresponding PSS-less SSB 322 of PSS 312.

In some embodiments, UE 110 may apply a relative power offset with respect to a PSS hypothesis. For example, UE 110 may apply a relative power offset with respect to a PSS hypothesis associated with a maximum value of an applied computation metric to identify reliable PSS hypothesis/PSS initialization. If the computed metric associated with a PSS hypothesis/initialization value is within the power offset with respect to the maximum value, UE 110 may determine the hypothesis to be reliable and apply a predefined additional time offset value. Otherwise, UE 110 may omit the predefined additional time offset value. In some embodiments, UE 110 may use both the threshold value and the relative power offset value to identify reliable PSS hypothesis.

Embodiments of the present disclosure therefore make it possible to pack PSS-less SSBs (SSSBs) in more compact manner in time domain, thereby reducing the system overhead. Also, fewer transmissions or transmitted periodical symbols are possible, to improve the energy efficiency of the network. In addition, packing the PSS-less SSBs in more compact manner in time domain can be exploited to improve the network scheduling flexibility. Packing the PSS-less SSBs in more compact manner may be also used to improve the time domain duration (i.e., shorten) measurements of UE 110, thereby providing potential gain for energy saving.

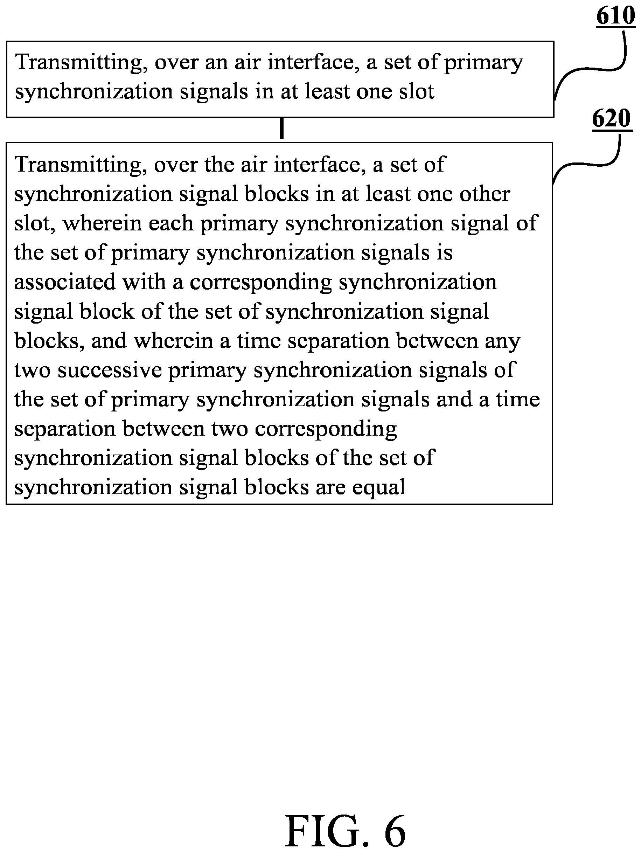

FIG. 6 illustrates a flow graph of a first method in accordance with at least some embodiments of the present disclosure. The phases of the illustrated method may be performed in base station 130, for example, or in a control device configured to control the functioning thereof, when installed therein.

The first method may comprise, at step 610, transmitting, over an air interface, a set of primary synchronization signals in at least one slot. The first method may also comprise, at step 620, transmitting, over the air interface, a set of synchronization signal blocks in at least one other slot, wherein each primary synchronization signal of the set of primary synchronization signals is associated with a corresponding synchronization signal block of the set of synchronization signal blocks, and wherein a time separation between any two successive primary synchronization signals of the set of primary synchronization signals and a time separation between two corresponding successive synchronization signal blocks of the set of synchronization signal blocks are equal.

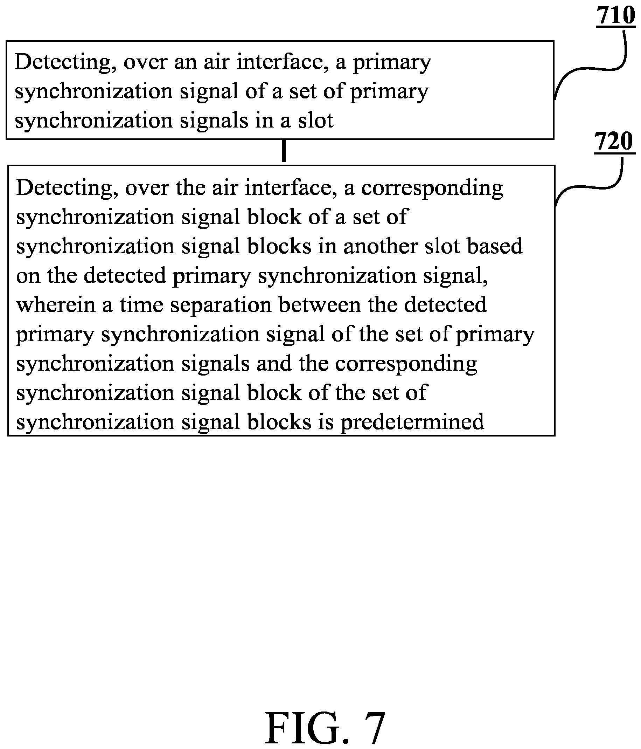

FIG. 7 illustrates a flow graph of a second method in accordance with at least some embodiments of the present disclosure. The phases of the illustrated method may be performed in UE 110, for example, or in a control device configured to control the functioning thereof, when installed therein.

The second method may comprise, at step 710, detecting, over an air interface, a primary synchronization signal of a set of primary synchronization signals in a slot. The second method may also comprise, at step 720, detecting, over the air interface, a corresponding synchronization signal block of a set of synchronization signal blocks in another slot based on the detected primary synchronization signal, wherein a time separation between the detected primary synchronization signal of the set of primary synchronization signals and the corresponding synchronization signal block of the set of synchronization signal blocks is predetermined.

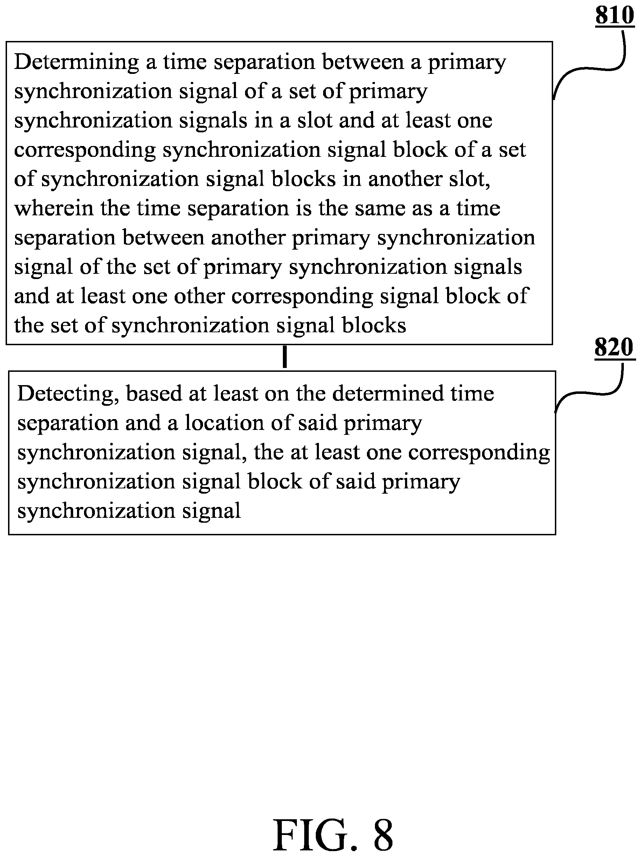

FIG. 8 illustrates a flow graph of a third method in accordance with at least some embodiments of the present disclosure. The phases of the illustrated method may be performed in UE 110, for example, or in a control device configured to control the functioning thereof, when installed therein.

The third method may comprise, at step 810, determining a time separation between a primary synchronization signal of a set of primary synchronization signals in a slot and at least one corresponding synchronization signal block of a set of synchronization signal blocks in another slot, wherein the time separation is the same as a time separation between another primary synchronization signal of the set of primary synchronization signals and at least one other corresponding synchronization signal block of the set of synchronization signal blocks. The third method may also comprise, at step 820, detecting, based at least on the determined time separation and a location of said primary synchronization signal, the at least one corresponding synchronization signal block of said primary synchronization signal.

It is to be understood that the embodiments of the disclosure disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present disclosure. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present disclosure may be referred to herein along with alternatives for the various components thereof. It is understood that such embodiments, examples, and alternatives are not to be construed as de facto equivalents of one another, but are to be considered as separate and autonomous representations of the present disclosure.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the disclosure. One skilled in the relevant art will recognize, however, that the disclosure can be practiced without one or more of the specific details, or with other methods, components, materials, etc. In other instances, well-known structures, materials, or operations are not shown or described in detail to avoid obscuring aspects of the disclosure.

While the forgoing examples are illustrative of the principles of the present disclosure in one or more particular applications, it will be apparent to those of ordinary skill in the art that numerous modifications in form, usage and details of implementation can be made without the exercise of inventive faculty, and without departing from the principles and concepts of the disclosure. Accordingly, it is not intended that the disclosure be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

INDUSTRIAL APPLICABILITY

At least some embodiments of the present disclosure find industrial application in wireless communication.

ACRONYMS LIST

| | |
|---|---|
| AMF | access and mobility management function |
| BPSK | binary phase-shift keying |
| CU | centralized unit |
| DL | downlink |
| DMRS | demodulation reference signal |
| DU | distributed unit |
| FFT | fast Fourier transform |
| FR | frequency range |
| GSM | global system for mobile communication |
| IAB | integrated access and backhaul |
| LTE | long term evolution |
| MME | mobility management entity |
| MT | mobile termination |
| NFC | near-field communication |
| NR | new radio |
| OFDM | orthogonal frequency domain multiplexing |
| PBCH | physical broadcast channel |
| PCI | physical cell identifier |
| PRB | physical resource blocks |
| PSS | primary synchronization signal |
| QPSK | quadrature phase shift keying |
| RRH | remote radio head |
| RRM | radio resource management |
| SIB | system information block |
| SSB | synchronization signal block |
| SSS | secondary synchronization signal |
| SSSB | PSS-less SSB |
| TDD | time division duplexing |
| TRS | tracking reference signal |
| UE | user equipment |
| UL | uplink |
| WCDMA | wideband code division multiple access |
| WiMAX | worldwide interoperability for microwave access |
| WLAN | wireless local area network |

REFERENCE SIGNS LIST

| | |
|---|---|
| 110 | user equipment, UE |
| 130, 135 | base station |
| 130A, 130B, 135A, 135B | cells |
| 140 | core network node |
| 150 | network |
| 210, 312 - 316 | PSSs |
| 210, 322 - 326 | PSS-less SSBs |
| 400 - 470 | structure of the device of FIG. 4 |

(continued)

| 510 - 550 | steps of FIG. 5 |
|---|---|
| 610 - 620 | phase of the method of FIG. 6 |
| 710 - 720 | phase of the method of FIG. 7 |
| 810 - 820 | phase of the method of FIG. 8 |

**Claims**

1.  An apparatus comprising at least one processing core and at least one memory storing instructions that, when executed by the at least one processing core, cause the apparatus at least to:

    - transmit, over an air interface, a set of primary synchronization signals in at least one slot; and
    - transmit, over the air interface, a set of synchronization signal blocks in at least one other slot,
    wherein each primary synchronization signal of the set of primary synchronization signals is associated with a corresponding synchronization signal block of the set of synchronization signal blocks,
    and wherein a time separation between any two successive primary synchronization signals of the set of primary synchronization signals and a time separation between two corresponding synchronization signal blocks of the set of synchronization signal blocks are equal.

2.  The apparatus according to claim 1, wherein a time separation between a primary synchronization signal of the set of primary synchronization signals and a corresponding synchronization signal block of the set of synchronization signal blocks is equal to a time separation between another primary synchronization signal of the set of primary synchronization signals and another corresponding synchronization signal block of the set of synchronization signal blocks.

3.  The apparatus according to claim 1 or claim 2, wherein a value of the time separation between a primary synchronization signal of the set of primary synchronization signals and a corresponding synchronization signal block of the set of synchronization signal blocks is pre-determined.

4.  The apparatus according to any of the preceding claims, wherein a time separation between a first primary synchronization signal and a second primary synchronization signal is expressed as a number of orthogonal frequency domain multiplexing symbols separating a first symbol carrying the first primary synchronization signal and a first symbol carrying the second primary synchronization signal, a time separation between a primary synchronization signal and a corresponding synchronization signal block is expressed as a number of orthogonal frequency domain multiplexing symbols separating a first symbol carrying the primary synchronization signal and a first symbol carrying the corresponding synchronization signal block, and a time separation between a first signal synchronization block and a second synchronization signal block is expressed as a number of orthogonal frequency domain multiplexing symbols separating a first symbol carrying the first signal synchronization block and a first symbol carrying the second synchronization signal block.

5.  The apparatus according to any of the preceding claims, wherein the set of synchronization signal blocks does not comprise any primary synchronization signals.

6.  The apparatus according to any of the preceding claims, wherein the set of synchronization signal blocks individually comprise a secondary synchronization signal and a physical broadcast channel.

7.  The apparatus according to any of the preceding claims, wherein a periodicity of the set of primary synchronization signals is larger than, or equal to, a periodicity of the set of synchronization signal blocks.

8.  The apparatus according to any of the preceding claims, wherein the set of primary synchronization signals precedes the set of synchronization signal blocks, or the set of synchronization signal blocks precedes the set of primary synchronization signals.

9.  The apparatus according to any preceding claims, wherein a primary synchronization signal of the set of primary synchronization signals and a corresponding synchronization signal block of the set of synchronization signal blocks are beamformed in a same direction.

EP 4 601 367 A1

10. The apparatus according to any preceding claims, wherein a primary synchronization signal of the set of primary synchronization signals and a corresponding synchronization signal block of the set of synchronization signal blocks are assigned a common index value.

11. The apparatus according to any preceding claims, wherein the time separation is based on a carrier frequency and/or a numerology.

12. The apparatus according to any preceding claims, wherein the set of primary synchronization signals is in 1:N relationship with N sets of synchronization signal blocks comprising the set of synchronization signal blocks, N being a positive integer greater than 1, or the set of primary synchronization signals is in 1:1 relationship with the set of synchronization signal blocks.

13. An apparatus comprising at least one processing core and at least one memory storing instructions that, when executed by the at least one processing core, cause the apparatus at least to:

- detect, over an air interface, a primary synchronization signal of a set of primary synchronization signals in a slot; and
- detect, over the air interface, a corresponding synchronization signal block of a set of synchronization signal blocks in another slot based on the detected primary synchronization signal,

wherein a time separation between the detected primary synchronization signal of the set of primary synchronization signals and the corresponding synchronization signal block of the set of synchronization signal blocks is predetermined.

14. A method, comprising:

- transmitting, by a base node over an air interface, a set of primary synchronization signals in at least one slot; and
- transmitting, by the base node over the air interface, a set of synchronization signal blocks in at least one other slot,

wherein each primary synchronization signal of the set of primary synchronization signals is associated with a corresponding synchronization signal block of the set of synchronization signal blocks,
and wherein a time separation between any two successive primary synchronization signals of the set of primary synchronization signals and a time separation between two corresponding successive synchronization signal blocks of the set of synchronization signal blocks are equal.

15. A method, comprising:

- detecting, by a user equipment and over an air interface, a primary synchronization signal of a set of primary synchronization signals in a slot; and
- detecting, by the user equipment over the air interface, a corresponding synchronization signal block of a set of synchronization signal blocks in another slot based on the detected primary synchronization signal,

wherein a time separation between the detected primary synchronization signal of the set of primary synchronization signals and the corresponding synchronization signal block of the set of synchronization signal blocks is predetermined.

FIG. 1

**FIG. 2**

EP 4 601 367 A1

Radio frame: 0 1 2 3 4 5 6 7 8 9 10 11 12 13 14 15 16 17 18 19

SSSB burst PSS

Slot: 0 1 2 3 4 5 6 7 8 9 10 11 12 13 14 15 16 17 18 19

SSSB slots

Symbol: 0 1 2 3 4 5 6 7 8 9 10 11 12 13      0 1 2 3 4 5 6 7 8 9 10 11 12 13

SSSBs in slot

3 SSBs

8 PSSs

**220**

**210**

FIG. 3

FIG. 4

510: selecting a frequency band

520: receiving PSS & PSS-less SSB

530: detecting PSS

540: detecting PSS-less SSB

550: continue initial access

FIG. 5

**610**

Transmitting, over an air interface, a set of primary synchronization signals in at least one slot

**620**

Transmitting, over the air interface, a set of synchronization signal blocks in at least one other slot, wherein each primary synchronization signal of the set of primary synchronization signals is associated with a corresponding synchronization signal block of the set of synchronization signal blocks, and wherein a time separation between any two successive primary synchronization signals of the set of primary synchronization signals and a time separation between two corresponding synchronization signal blocks of the set of synchronization signal blocks are equal

# FIG. 6

**710**

Detecting, over an air interface, a primary synchronization signal of a set of primary synchronization signals in a slot

**720**

Detecting, over the air interface, a corresponding synchronization signal block of a set of synchronization signal blocks in another slot based on the detected primary synchronization signal, wherein a time separation between the detected primary synchronization signal of the set of primary synchronization signals and the corresponding synchronization signal block of the set of synchronization signal blocks is predetermined

# FIG. 7

<u>**810**</u>

Determining a time separation between a primary synchronization signal of a set of primary synchronization signals in a slot and at least one corresponding synchronization signal block of a set of synchronization signal blocks in another slot, wherein the time separation is the same as a time separation between another primary synchronization signal of the set of primary synchronization signals and at least one other corresponding signal block of the set of synchronization signal blocks

<u>**820**</u>

Detecting, based at least on the determined time separation and a location of said primary synchronization signal, the at least one corresponding synchronization signal block of said primary synchronization signal

# FIG. 8

Europäisches
Patentamt

European
Patent Office

Office européen
des brevets

## EUROPEAN SEARCH REPORT

**Application Number**

EP 24 15 6773

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 082 935 B2 (HUAWEI TECH CO LTD [CN]) 3 August 2021 (2021-08-03) * page 11 - page 15; figures 6, 11, 12, 16 * | 1-15 | INV. H04W56/00 H04L5/0048 |
| X | HUAWEI ET AL: "Discussion on SS burst set composition and SS block time index indication", 3GPP DRAFT; R1-1705052, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 2 April 2017 (2017-04-02), XP051243183, Retrieved from the Internet: URL:http://www.3gpp.org/ftp/Meetings_3GPP_SYNC/RAN1/Docs/ [retrieved on 2017-04-02] * page 6; figure 3 * | 1-15 | |
| X | US 2019/349872 A1 (HARADA HIROKI [JP] ET AL) 14 November 2019 (2019-11-14) * page 6, paragraph [78] - paragraph [79]; figure 6 * | 1-15 | TECHNICAL FIELDS SEARCHED (IPC) H04W H04L |

The present search report has been drawn up for all claims

| Place of search | Date of completion of the search | Examiner |
|---|---|---|
| The Hague | 24 July 2024 | Gökceli, Selahattin |

EPO FORM 1503 03.82 (P04C01)

## ANNEX TO THE EUROPEAN SEARCH REPORT
## ON EUROPEAN PATENT APPLICATION NO.

EP 24 15 6773

24-07-2024

| Patent document cited in search report | | Publication date | Patent family member(s) | | Publication date |
|---|---|---|---|---|---|
| US 11082935 | B2 | 03-08-2021 | CN | 108632983 A | 09-10-2018 |
| | | | EP | 3576470 A1 | 04-12-2019 |
| | | | US | 2020022099 A1 | 16-01-2020 |
| | | | WO | 2018171741 A1 | 27-09-2018 |
| US 2019349872 | A1 | 14-11-2019 | CN | 109792675 A | 21-05-2019 |
| | | | US | 2019349872 A1 | 14-11-2019 |
| | | | WO | 2018062460 A1 | 05-04-2018 |

EPO FORM P0459

For more details about this annex : see Official Journal of the European Patent Office, No. 12/82